# EUROPEAN PATENT APPLICATION

(11) **EP 4 800 727 A1**
(43) Date of publication of application: **02.09.2026**
(21) Application number: 24890654.7
(22) Date of filing: 12.11.2024
(51) Int. Cl.: H01G 11/44, H01G 11/26

(54) **POROUS CARBON MATERIAL, PREPARATION METHOD THEREFOR AND USE THEREOF, AND SUPERCAPACITOR**

(30) Priority: 17.11.2023 CN 202311534916
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: ZHAO, Liping, Dalian, Liaoning 116045 (CN); ZHANG, Shudong, Dalian, Liaoning 116045 (CN); SONG, Yongyi, Dalian, Liaoning 116045 (CN); LI, Yuying, Dalian, Liaoning 116045 (CN); MA, Rui, Dalian, Liaoning 116045 (CN); CAI, Haile, Dalian, Liaoning 116045 (CN); YAN, Dong, Dalian, Liaoning 116045 (CN); CHENG, Ming, Dalian, Liaoning 116045 (CN); QU, Jingwen, Dalian, Liaoning 116045 (CN)
(74) Representative: karo IP
(86) International application number: PCT/CN2024/131532
(87) International publication number: WO 2025/103299

(57) **Abstract**

The present invention relates to a porous carbon material, a preparation method therefor and a use thereof. The specific surface area of the porous carbon material is 1500-3000 m²/g, and the pore size distribution is concentrated in the range 0.6-2.0 nm. The preparation method for the porous carbon material comprises the following steps: (1) acid treatment of montmorillonite; (2) uniformly mixing the acid-treated montmorillonite obtained in step (1) with asphalt and performing carbonization treatment to obtain a carbonized material; and (3) under an inert atmosphere condition, mixing the carbonized material with an activating agent for activation, and then washing and drying. The porous carbon material obtained in the present invention has the advantages of large specific surface area, reasonable pore diameter distribution, high ion transmission speed and the like, and is a supercapacitor carbon material with excellent rate performance.

## Description

### CROSS-REFERENCE TO RELATED APPLICATIONS

The application claims the benefit of the China patent application No. "202311534916.0", filed on November 17, 2023, the content of which is specifically and entirely incorporated herein by reference.

### TECHNICAL FIELD

The present invention relates to a porous carbon material, a preparation method therefor, a use of the porous carbon material in a supercapacitor as a supercapacitor carbon, and a supercapacitor using the porous carbon material.

### BACKGROUND ART

Capacitor carbon is a high-end activated carbon product with the characteristics such as a large specific surface area, abundant nanometer scale micropores, stable surface physicochemical properties and large adsorption capacity, it has wide application prospect in the emerging technical fields such as electronic electrodes, novel catalyst supports, energy storage, electric vehicles, functional adsorbents, in particular, exhibits higher added value in the use as a supercapacitor electrode material. Compared with the lithium battery, the advantages of the supercapacitor are mainly reflected in its superior rate performance, rapid charge-discharge performance and long-period cycle performance, therefore, it has been a goal pursued by the industry to improve properties of the supercapacitor in these areas. Since the two-dimensional nano-plate carbon materials have continuous electron migration channels and are easily contacted with an electrolyte solution, the prior art generally improves the capacitive performance of the supercapacitor by means of adding carbon nanotubes, graphene, and other conductive materials. For example, both CN114597074A and CN109665523A disclose a solution of adding graphene oxide into activated carbon to enhance conductivity of the activated carbon, thereby improving the capacitive performance of the supercapacitor carbon. CN106115694A discloses a solution of mixing the melted matrix asphalt with graphene oxide to prepare a composite asphalt-based active carbon. The composite asphalt-based active carbon produced with the method has a specific surface area of 2,300-3,200m²/g, a mesoporosity of 6-10µm, nitrogen content of 1-3%, the content of metal impurities less than 100ppm, and a high specific capacity, but the rate performance and long cycle performance of the produced capacitor are poor. The common disadvantage of the above methods is that the high-temperature mixing process of graphene oxide with the asphalt coke or activated carbon in the early stage needs to be repeated multiple times to improve uniformity of the conductive network in the composite material, the process is complicated, and graphene oxide and activated carbon are independent particles, thus it is difficult to ensure stability and long-period cycle performance of the product.

Therefore, despite the many modification methods described above, it is difficult to ensure that a product balances the specific capacity, rate discharge performance and long-period cycle performance.

### SUMMARY OF THE INVENTION

In view of the deficiencies in the prior art, a core purpose of the present invention is to provide a supercapacitor carbon simultaneously balances the desirable specific capacity, rate performance and long-period cycle performance, and a preparation method thereof.

The first aspect of the present invention provides a porous carbon material, wherein the porous carbon material has a pore volume of pores with a pore diameter of 0.6-2nm more than 50vol%, and a ratio of pore volume of pores with a pore diameter of 1-2nm to pore volume of pores with a pore diameter of 0.6-1nm is within the range of 1-3, preferably within the range of 1.9-2.6.

The second aspect of the present invention provides a preparation method for a porous carbon material, the preparation method comprises subjecting an organic carbon source to carbonization and activation successively, the carbonization is performed in the presence of montmorillonite.

The third aspect of the present invention provides a porous carbon material produced with the aforementioned preparation method.

The fourth aspect of the present invention provides a use of the aforementioned porous carbon material in a supercapacitor.

The fifth aspect of the present invention provides a supercapacitor, wherein the supercapacitor uses the aforementioned porous carbon material as an active electrode material.

The present invention provides a porous carbon material having a concentrated distribution of pore size within the range of 0.6-2nm, and a ratio of pore volume of pores with a pore diameter of 1-2nm to pore volume of pores with a pore diameter of 0.6-1nm is within the range of 1-3, such that the specific capacity, rate performance and long-period cycle performance of the supercapacitor can be greatly improved when the carbon material is used as a supercapacitor active material, the reasons may be that the pores having a pore diameter of 0.6-2nm (in particular 1-2nm) is more favorable for efficient infiltration of an electrolyte solution, shortens the transport distances of ion and charge, the rate performance of the material is greatly improved by the high charge transport speed, a large number of pores having a pore size of 1-2nm can also improve the capacitance and long-period cycle performance of the material.

In the present invention, the montmorillonite (in particular, the montmorillonite is subjected to a monolayer exfoliation shortly after an acid treatment) is added during the carbonization process of the organic carbon material, such that the prepared porous carbon material has a specific pore size structure, possibly because that the montmorillonite monolayer acts as a nano-scale two-dimensional domain-limited cell during the activation process of asphalt, whereby the formation process of the supercapacitor carbon follows the direction of the two-dimensional lamella, hindering the relative motion of the asphalt molecules, whereby the space blocking effect of the montmorillonite lamella fastens the structural dimensions of the material, and the montmorillonite lamella acts as a hard template agent, it is conducive to increasing the proportion of the pore size structure between 1 nm and 2nm during the activation process, so that the prepared carbon material has a pore size concentrated within the range of 0.6-2 nm, and exhibits a structure that the long range is disordered and the short range is ordered, when the porous carbon material is used in a supercapacitor, it can ensure that the capacitor has a combination of larger capacity, higher rate discharge performance and desirable long-period cycle performance.

### BRIEF DESCRIPTION OF THE DRAWINGS

FIG. 1 is a pore diameter distribution graph of the supercapacitor carbon prepared in Example 1 of the invention.
FIG. 2 illustrates an electron microscope photograph of the supercapacitor carbon prepared in Example 1 of the invention.
FIG. 3 is a Raman spectrogram of the supercapacitor carbon prepared in Example 1 of the invention.
Fig. 4 shows the long-period cycle performance of the supercapacitor carbon prepared in Example 1 of the invention after 100,000 charge-discharge cycles.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The present invention provides a porous carbon material having a concentrated distribution of pore size within the range of 0.6-2nm, in the pore size structure, the porous carbon material has a pore volume of pores with a pore diameter of 0.6-2nm more than 50vol%, preferably not less than 60vol%, and a ratio of pore volume of pores with a pore diameter of 1-2nm to pore volume of pores with a pore diameter of 0.6-1nm is within the range of 1-3, preferably within the range of 1.9-2.6.

Unless otherwise specified in the invention, the pores with a pore diameter of 0.6-1nm refer to the pores having a pore diameter larger than or equal to 0.6nm and less than 1nm.

The present invention provides a porous carbon material having a concentrated distribution of pore size within the range of 0.6-2nm, the pores having a pore diameter of 0.6-2nm (in particular 1-2nm) is more favorable for efficient infiltration of an electrolyte solution, shortens the transport distances of ion and charge, the high charge transport speed greatly improves the rate performance, specific capacitance and long-period cycle performance of the material.

Further, the specific surface area of the porous carbon material may be within the range of 1,500-3,000 m²/g, preferably within the range of 1,800-2,700 m²/g. Suitable specific surface area can desirably satisfy the rate performance, capacity and long-period cycle performance requirements of the supercapacitor.

In the invention, the specific surface area and pore distribution curve are determined by using the Micromeritics ASAP 2020 type adsorbent via the nitrogen adsorption-desorption curve.

According to a preferred embodiment of the invention, the porous carbon material has a median particle size D₅₀ within the range of 5-10µm. For example, the D₅₀ of the porous carbon material may be 5µm, 6µm, 7µm, 8µm, 9µm, 10µm, and a random value within the range consisting of any two of the above-mentioned points.

According to a preferred embodiment of the invention, the porous carbon material has a carbon content of 99wt% or more.

The Raman spectrogram of said porous carbon material provided by the invention only presents spectral peaks in the range of 1300-1600 wavenumber/cm⁻¹ within the range of 800-2000 wavenumber/cm⁻¹, and the spectral peak near 1350 wavenumber/cm⁻¹ has a larger peak width and a smaller peak height than the spectral peak near 1580 wavenumber/cm⁻¹; preferably, the peak width ratio and the peak height ratio of the spectral peak near 1350 wavenumber/cm⁻¹ to the spectral peak near 1580 wavenumber/cm⁻¹ are 1: (0.5-0.95) and 1: (1.05-1.5) respectively. Unless otherwise indicated in the present invention, the vicinity refers to that the acceptable errors in the invention resulting from the instrumentation/operation and other factor, such as ± 10 wavenumber/cm⁻¹.

Further, the size La value of aromatic lamellae of said porous carbon material is within the range of 4.4-6nm, preferably within the range of 4.6-5.8nm.

The size La value of aromatic lamellae of said porous carbon material refers to the diameter of the carbon graphite microcrystalline aromatic lamellae. A large La value in the above range is conducive to shortening the transport distance of ion and charge and increasing the charge transport speed, thereby further ensuring the desirable rate performance, capacity and long-period cycle performance of the capacitor. According to the invention, the size La value of aromatic lamellae is calculated based on the X-ray diffraction result of the porous carbon material using the Scherrer formula *L*ₐ=0.89×0.15406/ *(B* ₍₁₀₀₎ cosθ ₍₁₀₀₎), wherein *B* ₍₁₀₀₎ denotes the full width at half maximum corresponding to the (100) peak porous carbon material; *θ*(100) denotes the Bragg angle corresponding to the (100) peak.

The porous carbon material provided by the invention is suitable for use a supercapacitor carbon in the supercapacitor, because it has a large amount of pores with a pore diameter of 0.6~2nm, especially 1~2nm, and a large specific surface area and a high La value.

The preparation method for a porous carbon material provided according to the second aspect of the invention comprises subjecting an organic carbon source to carbonization and activation successively in the presence of montmorillonite, then removing the montmorillonite and other impurities, the obtained porous carbon material had a large amount of pores with a pore size of 0.6-2nm and a large specific surface area and a high La value, and a high rate discharge type of capacitor can be obtained when the porous carbon material is used as a supercapacitor carbon in the supercapacitor. The reasons may be that the lamellar structure of the montmorillonite can effectively limit the delocalization of the organic carbon source during the carbonization process, and the composition of the carbon source preferentially forms a planar structure, thereby promoting the growth of the material along the two-dimensional direction, the space blocking effect of the montmorillonite lamella fastens the structural dimensions of the material, and the montmorillonite lamella acts as a hard template agent, it increases the content of pores with a pore size structure between 1 nm and 2nm in the porous carbon.

The present inventors have found that the acidification modification of montmorillonite, on the one hand, increases the surface acidity of the montmorillonite, enhances its catalytic activity on the polycondensation reaction of an organic carbon source (e.g., asphalt), and on the other hand, increases the specific surface area and porosity of the montmorillonite, facilitating dispersion of montmorillonite in the organic carbon source (e.g., asphalt), thereby ultimately improving the rate discharge performance of the carbon material. Therefore, according to a preferred embodiment of the invention, the montmorillonite is subjected to an acid treatment before carbonization with the organic carbon source, i.e., the montmorillonite is preferably an acid-treated montmorillonite.

Preferably, the acidification modification conditions of montmorillonite cause that the acid-treated montmorillonite has a specific surface area within the range of 50-1,000m²/g, preferably within the range of 150-600m²/g.

According to one specific embodiment of the invention, the acidification treatment mode is sufficiently contacting the montmorillonite raw material with an organic acid and/or an inorganic acids, under the condition of stirring or without stirring, the contacting conditions comprise that the temperature may be within the range of 20-100°C, preferably within the range of 30-70°C; the acid treatment time may be 2-48h, preferably 5-30 h, more preferably 5-24h. The residual acid on the surface of said montmorillonite is then removed by filtering and washing.

For convenience of distinction, the invention calls the montmorillonite without subjecting to the acid treatment as the montmorillonite raw material. The montmorillonite raw material may be any one of the existing montmorillonite products, such as at least one selected from the group consisting of sodium-based montmorillonite, calcium-based montmorillonite, sodium-calcium-based montmorillonite, lithium-based montmorillonite, magnesium-based montmorillonite, and hydrogen-based montmorillonite, preferably sodium-based montmorillonite.

Preferably, the montmorillonite has a nanometer lamellar aluminosilicate structure.

In a preferred embodiment of the invention, the silica tetrahedron and the alumina tetrahedron in montmorillonite are connected by sharing oxygen atoms.

Further preferably, the montmorillonite has a thermal decomposition temperature not lower than 650°C.

The montmorillonite satisfying the above conditions may be, for example, at least one of the sodium montmorillonite (Na-MMT), calcium montmorillonite, magnesium montmorillonite and hydrogen montmorillonite manufactured by the Macklin Corporation.

It is further preferred that the montmorillonite raw material has a specific surface area within the range of 20-300 m²/g, preferably within the range of 20-250 m²/g.

Further preferably, the montmorillonite raw material has a particle diameter within the range of 0.1-20µm, preferably within the range of 0.3-15µm, more preferably within the range of 10-15µm.

The acid used for the acid treatment may be selected from inorganic acids and/or organic acids, preferably inorganic acids; it may be one or more of strong acid, medium-to-strong acid and weak acid. The inorganic acid may be one selected from the group consisting of hydrochloric acid, sulfuric acid, nitric acid, phosphoric acid, perchloric acid or mixed acid thereof, and preferably nitric acid. The organic acid may be a monoacid or a polybasic acid with more than two acid functions, for example, it may be formic acid, acetic acid, succinic acid, oxalic acid, citric acid, tartaric acid, salicylic acid, malic acid, or a mixed acid thereof. The acid is preferably used in the form of an aqueous solution having the H⁺ concentration within the range of 0.1-6 mol/L, preferably within the range of 0.5-3 mol/L.

Preferably, the liquid-solid ratio of said montmorillonite to said acid solution is within the range of 5-50mL/g, preferably within the range of 8-30mL/g, more preferably within the range of 15-30mL/g. The liquid-solid ratio of said montmorillonite to said acid solution may be 5mL/g, 8mL/g, 10mL/g, 12mL/g, 15mL/g, 17mL/g, 19mL/g, 21mL/g, 23mL/g, 25mL/g, 30mL/g, 40mL/g, 50mL/g, and a random value within the range consisting of any two of the above-mentioned points.

In order to remove the free acid in the acid-treated montmorillonite, the method of the invention preferably further comprises washing the montmorillonite after the acid treatment. The washing is preferably performed by washing with deionized water several times until the filtrate is neutral. The acid-treated montmorillonite can be obtained by drying after the washing process, the drying conditions comprise: a drying temperature within the range of 40-150°C, preferably within the range of 40-110°C, and a drying time of 1-48 hours, preferably 6-24 hours.

In the invention, the organic carbon source may be any organic substance which is capable of obtaining a carbon material with a porous structure after carbonization, preferably petroleum-based carbon, more preferably asphalt, further preferably, the asphalt is one or more selected from the group consisting of petroleum asphalt, coal asphalt, and especially preferably petroleum asphalt.

Preferably, the asphalt has a softening point within the range of 80-350°C, more preferably within the range of 100-300°C.

Preferably, the asphalt has a density within the range of 0.6-1.4g/cm³, more preferably within the range of 0.9-1.25g/cm³.

According to a preferred embodiment of the invention, the mass ratio of the organic carbon source to montmorillonite is (100-1) : 1, preferably (50-3) : 1, more preferably (20-3) : 1. The mass ratio of the organic carbon source to montmorillonite may be 1:1, 2:1, 3:1, 4:1, 5:1, 6:1, 8:1, 10:1, 15:1, 20:1, 30:1, 40:1, 50:1, 60:1, 80:1, 100:1, and a random value within the range consisting of any two of the above-mentioned points.

Prior to carbonization, the organic carbon source may be uniformly mixed with the montmorillonite or acid-treated montmorillonite by melt blending, shearing, ball milling, and other mode, preferably by melt blending and shearing at a high speed. Further, the shearing rate of the high speed shearing machine during the shearing and mixing process is within the range of 2,000-20,000 r/min, preferably within the range of 3,000-8,000 r/min. The present inventors have discovered that melt blending and high speed shearing modes enable the montmorillonite to obtain a more amount of single-layer structure, thereby desirably performing a confinement effect on the organic carbon source during the carbonization process, and produce a porous carbon material with a larger La value and a larger specific surface area, thereby further improving the capacity, rate performance and long-period cycle performance of the supercapacitor.

Further, the temperature of mixing the organic carbon source with the montmorillonite or acid-treated montmorillonite may be within the range of 100-350°C, preferably 150-300°C, and the mixing time may be 0.2-3h, preferably 0.5-2h.

In the present invention, the carbonization treatment is carried out in the absence of oxygen gas, preferably under an inert atmosphere, which may be nitrogen gas and/or an inert gas, the inert gas is one or more of helium, neon, argon, krypton or xenon.

The carbonation treatment conditions comprise: a carbonation treatment temperature may be within the range of 200-650°C and preferably within the range of 300-600°C; and the temperature rise rate may be controlled within the range of 1-20°C/min, preferably within the range of 5-15°C/min. The carbonation treatment time may be 40-500 minutes. The carbonation treatment time is defined herein as a carbonization time at constant temperature, excluding a temperature rise time and a cooling time.

The carbonization treatment may be carried out at one temperature, or performed in stages at two temperatures, preferably performed in stages at two temperatures.

When the carbonization treatment is carried out at one temperature, the treatment temperature may be within the range of 200-650°C, preferably 300-600°C; and the temperature rise rate may be controlled within the range of 1-20°C/min, preferably within the range of 2-15°C/min; the gas flow rate may be within the range of 50-500mL/min, preferably 200-500mL/min; and the carbonation treatment time may be within the range of 20-300min, preferably within the range of 60-300min.

When the carbonation treatment is performed in stages at two temperatures, and the first stage of carbonization may be carried out at a temperature of 300-550°C, preferably 450-520°C; and the temperature rise rate may be controlled within the range of 1-15°C/min, preferably within the range of 5-15°C/min; the gas flow rate may be within the range of 100-500mL/min, preferably 200-500mL/min; and the carbonation treatment time may be within the range of 10-100min, preferably within the range of 20-60min.

The second stage of carbonization may be carried out at a temperature of 400-650°C, preferably 500-600°C; and the temperature rise rate may be controlled within the range of 5-20°C/min, preferably within the range of 5-15°C/min; the gas flow rate may be within the range of 100-500mL/min, preferably 200-300mL/min; and the carbonation treatment time may be within the range of 40-200min, preferably within the range of 60-200min.

According to a preferred embodiment of the invention, the carbonization temperature in the first stage is 50-150°C lower than the carbonization temperature in the second stage, and the carbonation treatment time of the first stage is 20-180 minutes shorter than that of the second stage. In this way, the specific capacity, rate charge-discharge performance and long-period cycle performance of the produced carbon material can be further improved.

Given that the solid material obtained after completion of the carbonation treatment does not undergo significant separation between the two phases, it is a homogeneous black mixture. In order to obtain the desired porous carbon material, it is also necessary to carry out activation after carbonization.

Preferably, the solid material is initially cooled to room temperature or ambient temperature after completion of the carbonation treatment, the cooling mode is not limited in the invention, it may be natural cooling, or cooling the material with an additional heat exchange means. Further preferably, the solid material obtained after the cooling process is pulverized to a particle size of 10-100µm, preferably 10-30µm, and then subjected to activation.

The activating agent used for activation is preferably at least one of hydroxide and carbonate that contain an alkali metal and/or alkaline earth metal. Preferably, the activating agent is a granular solid, typically with a particle size of 10-300µm. In particular, the activating agent may be one or more selected from the group consisting of sodium hydroxide, potassium hydroxide, sodium carbonate, potassium carbonate, potassium bicarbonate, sodium bicarbonate, calcium hydroxide and magnesium hydroxide, preferably one or more of sodium hydroxide, potassium hydroxide and potassium carbonate.

Preferably, the activation treatment conditions comprise: an activation temperature may be within the range of 600-1,000°C, preferably within the range of 700-900°C; the temperature rise rate of the activation is generally controlled to be 1-10°C/min, preferably 8-10°C/min; and the activation time may be 20-180 min, preferably 20-120 min. Further preferably, the activation is carried out in the absence of oxygen gas, preferably under an inert atmosphere, which may be nitrogen gas and/or an inert gas, the inert gas is one or more of helium, neon, argon, krypton or xenon. The gas flow rate may be within the range of 100-500mL/min, preferably within the range of 200-500mL/min.

Further preferably, the weight ratio of the carbonized material to the activating agent is 1: (0.2-10), preferably 1: (1.5-3), more preferably 1: (2-3). The weight ratio of the carbonized material to the activating agent may be 1:0.2, 1:1, 1:1.5, 1:1.7, 1:1.8, 1:2, 1:2.1, 1:2.2, 1:2.5, 1:2.6, 1:2.8, 1:3, 1:4, 1:5, 1:10, and a random value within the range consisting of any two of the above-mentioned points.

According to a preferred embodiment of the invention, the method further comprises washing the activated product. The main purpose of the washing operation is to remove the residual montmorillonite and the alkaline material generated from the reaction, and to expose the rich pore size structure formed during the activation process. The washing may comprise a first-stage water washing, a second-stage acid washing and a third-stage water washing, wherein the first-stage water washing is performed at a temperature of 30-100°C, preferably 60-100°C, the first-stage water washing is preferably carried out under the conditions of condensation reflux and stirring, the first-stage water washing time is 2-48h, preferably 5-24h, and the first-stage water washing has a liquid-solid mass ratio of (10-50) : 1, preferably (10-30) : 1. The acid solution used in the second-stage acid washing may be one or more of hydrochloric acid, nitric acid, sulfuric acid and acetic acid. The acid solution may have a mass fraction of 0.5-20%, preferably 1-10%. The liquid-solid mass ratio of the acid solution to the solid material may be (5-30) : 1, preferably (5-20): 1. The third-stage water washing is washing several times with deionized water or ultrapure water, the liquid-solid mass ratio of water to the solid material during the water washing process may be (10-50) : 1, preferably (10-30) : 1; and the third-stage water washing is carried out under the room temperature condition.

According to a preferred embodiment of the invention, the method further comprises drying the washed product. The drying temperature may be within the range of 60-150°C, preferably within the range of 60-120°C; the drying time is 1-24h, preferably 4-12h.

According to a specific embodiment of the present invention, the preparation method of a porous carbon material comprises the following steps:
(1) Subjecting an organic carbon material to a carbonization treatment in the presence of montmorillonite under an inert atmosphere condition to obtain a carbonized material;
(2) Contacting the carbonized material with an activating agent for activation, followed by washing and drying.

According to a particularly preferred embodiment of the present invention, the preparation method of a porous carbon material comprises the following steps:
(1) Subjecting montmorillonite to an acid treatment by contacting with an acid solution to obtain an acid-treated montmorillonite;
(2) Mixing the acid-treated montmorillonite obtained in step (1) with an organic carbon source (preferably asphalt) uniformly under an inert atmosphere and performing a carbonization treatment to obtain a carbonized material;
(3) Blending the carbonized material with an activating agent under an inert atmosphere for activation, followed by washing and drying.

The third aspect of the present invention provides a porous carbon material produced with the aforementioned preparation method.

The porous carbon material produced with the aforementioned method has a large number of pores with a pore size of 0.6-2nm (particularly 1-2nm), and a large specific surface area and La value, it is suitable as a supercapacitor carbon for the supercapacitor. Therefore, the fourth aspect the present invention provides an use of the porous carbon material in a supercapacitor, preferably as an active electrode material.

The fifth aspect of the present invention provides a supercapacitor that uses the aforementioned porous carbon material as an active electrode material.

When the supercapacitor is an organic tethered supercapacitor, the mass ratio capacitance may be within the range of 25-45F/g, preferably within the range of 35-45F/g at a current density of 1A/g; a mass ratio capacitance of the organic tethered supercapacitor may be within the range of 20-40F/g, preferably within the range of 30-39F/g at an increased current density of 15A/g; the specific capacitance retention rate after 100,000 charge-discharge cycles may be within the range of 78-95%, preferably within the range of 85-95%.

The invention will be further described below with reference to examples.

In the examples, the specific surface area and pore distribution curve were determined by using the Micromeritics ASAP 2020 type adsorbent via the nitrogen adsorption-desorption curve, the operation temperature was -196°C (liquid nitrogen temperature), prior to testing, the sample was subjected to dehydration pretreatment at 300°C under the protection of nitrogen gas. The specific surface area and pore diameter distribution were calculated by the BET method and the DFT method, respectively.

The electron microscope was tested using the Japanese electron field emission scanning electron microscope JEM7500M; Raman spectrum was tested using the model HR-800 Raman spectrometer manufactured by the HORIBA JobinYvon Gmbh, France.

The electrochemical test method was as follows: activated carbon, conductive agent acetylene black, and a binder PVDF (polyvinylidene fluoride) were mixed uniformly according to a mass ratio of 8:1:1, the mixture was coated on carbon-coated aluminum foil, and then dried and sliced, the pole piece surface density was 2.6mg/cm² (pole piece surface density = (weight after coating - weight before coating) / the coating area), and assembled into an organic tethered supercapacitor, wherein the electrolyte solution was tetraethylammonium tetrafluoroborate with a concentration of 1mol/L dissolved in propylene carbonate. Subsequently, the electrochemical performance test and long-period cycle performance test were performed on a Neware Electrochemical Tester (model BTS-5V50 mA).

### Example 1

5g of montmorillonite (Na-MMT, produced by the Macklin Corporation, with a specific surface area of 240m²/g and an average particle diameter of 10µm) was accurately weighed and placed in a 250mL single-mouth flask, 150mL of nitric acid solution with a concentration of 2mol/L was added, stirred at a constant temperature of 50°C and carried out the acidification for 24 h, cooled to room temperature (25°C, hereinafter the same) and subjected to suction filtration, the product was washed with deionized water to neutral, then subjected to drying at 110°C for 12 h, milled and sieved to obtain an acidified montmorillonite with a particle diameter less than 15µm and a specific surface area of 485m²/g.

20g of petroleum asphalt (with a softening point of 190°C and a density of 1.12g/cm³) was weighed, heated to the molten state, 4g of the acidified montmorillonite was added into the asphalt in the molten state under the stirring condition, the molten blend was sheared by using a high speed shearing machine at a shearing rate of 6,000 r/min for 1h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 480°C at a temperature rise rate of 5°C/min under the nitrogen gas flow rate of 300mL/min, the carbonization at the constant temperature was performed for 40 min, the temperature was further increased to 590°C at a temperature rise rate of 10°C/min, the carbonization at the constant temperature was performed for 60 min, then cooled to room temperature, the carbonized product was pulverized to a micron level in a gas flow-breaker as the second material.

15g of the second material and 45g of KOH were uniformly mixed and loaded into a corundum ark, which was put into an activation furnace, after the air in the activation furnace was replaced with nitrogen gas at a flow rate of 500mL/min for 20min, the temperature was increased to 900°C at a temperature rise rate of 10°C/min under the nitrogen gas flow rate of 200mL/min, the activation at the constant temperature was performed for 40 min, the heating was shut off, the product was cooled to room temperature and taken out as an activated product. The activated product was transferred into a flask, deionized water was added according to a liquid-to-solid mass ratio of 15:1, heated to 100°C and subjected to condensation reflux, magnetically stirred for 5h, suction filtration was performed, washed with water according to a liquid-to-solid mass ratio of 40:1, followed by suction filtration and washing with dilute hydrochloric acid having a mass fraction of 5% according to a liquid-to-solid mass ratio of 15:1, and then washed with water according to a liquid-to-solid mass ratio of 40:1, the obtained filter cake was dried in a blast drying oven at 105°C for 8h, a porous carbon was obtained. The porous carbon was ball-milled to a D₅₀ of 8-10µm, and the metal ions were removed by a magnetic separator, an asphalt-based supercapacitor carbon was obtained.

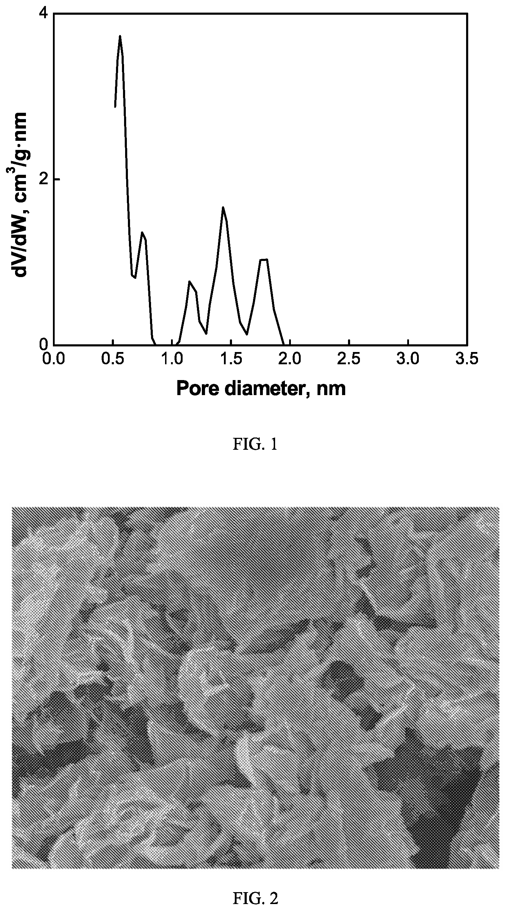

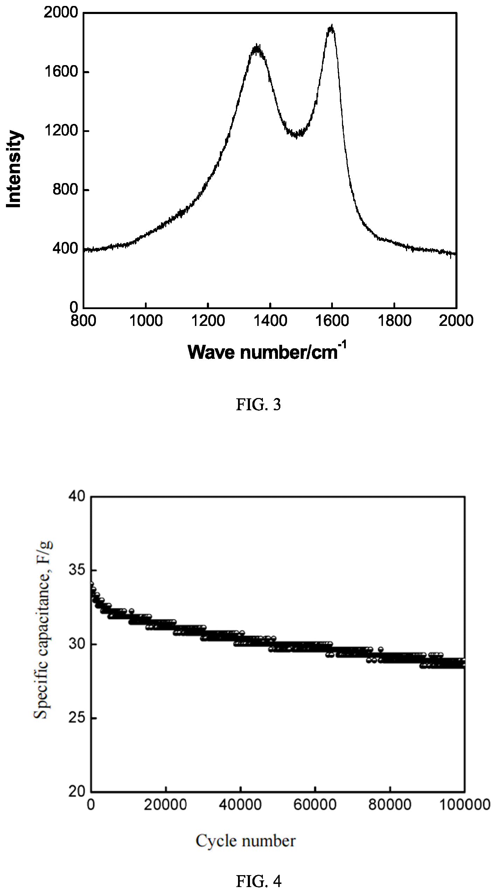

The pore diameter distribution graph, the electron microscope photograph and the Raman spectrogram of the obtained supercapacitor carbon were shown in FIG. 1, FIG. 2 and FIG. 3 respectively. As illustrated by FIG. 1, the total content of the pores with a pore diameter less than 0.6nm and the pores with a pore diameter larger than 2.0nm was 28vol%, the content of pores with a pore diameter of 1.0-2.0nm was 1.9 times the content of pores with a pore diameter of 0.6-1nm. As shown by FIG. 2, the prepared porous carbon material had an obvious lamellar structure, wherein the long-range was disordered and the short-range was ordered. As can be seen from FIG. 3, the Raman spectrum of said porous carbon material only presented spectral peaks in the range of 1300-1600 wavenumber/cm⁻¹ within the range of 800-2000 wavenumber/cm⁻¹, and the spectral peak near 1350 wavenumber/cm⁻¹ had a larger peak width and a smaller peak height than the spectral peak near 1580 wavenumber/cm⁻¹; preferably, the peak width ratio and the peak height ratio of the spectral peak near 1350 wavenumber/cm⁻¹ to the spectral peak near 1580 wavenumber/cm⁻¹ were 1: 0.71 and 1: 1.11 respectively.

In addition, the specific surface area of the supercapacitor carbon was measured to be 2,363m²/g, and the size La of the aromatic lamellae was 4.9nm.

Upon the electrochemical testing, the organic tethered supercapacitor had a mass ratio capacitance of 42.5F/g at a current density of 1A/g; the organic tethered supercapacitor had a mass ratio capacitance of 39F/g at an increased current density of 15A/g; the specific capacitance retention rate was 91.8%, the specific capacitance retention rate after 100,000 charge-discharge cycles was 89.7% (refer to FIG. 4).

### Example 2

5g of montmorillonite (Ga-MMT, produced by the Macklin Corporation, with a specific surface area of 190m²/g and an average particle diameter of 15µm) was accurately weighed and placed in a 150mL single-mouth flask, 75mL of hydrochloric acid solution with a concentration of 3mol/L was added, stirred at a constant temperature of 70°C and carried out the acidification for 15 h, cooled to room temperature and subjected to suction filtration, the product was washed with deionized water to neutral, then subjected to drying at 110°C for 12 h, milled and sieved to obtain an acidified montmorillonite with a particle diameter less than 15µm and a specific surface area of 369m²/g.

20g of asphalt (with a softening point of 280°C and a density of 1.21g/cm³) was weighed, heated to 300°C, 1g of the acidified montmorillonite was added into the asphalt in the molten state under the stirring condition, the molten blend was sheared by using a high speed shearing machine at a shearing rate of 3,000 r/min for 2h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 450°C at a temperature rise rate of 2°C/min under the nitrogen gas flow rate of 300mL/min, the carbonization at the constant temperature was performed for 60 min, the temperature was further increased to 550°C at a temperature rise rate of 15°C/min, the carbonization at the constant temperature was performed for 120 min, then cooled to room temperature, the carbonized product was pulverized to a micron level in a gas flow-breaker as the second material.

15g of the second material and 38g of KOH were uniformly mixed and loaded into a corundum ark, which was put into an activation furnace, after the air in the activation furnace was replaced with nitrogen gas at a flow rate of 500mL/min for 20min, the temperature was increased to 800°C at a temperature rise rate of 8°C/min under the nitrogen gas flow rate of 300mL/min, the activation at the constant temperature was performed for 120 min, the heating was shut off, the product was cooled to room temperature and taken out as an activated product. The activated product was transferred into a flask, deionized water was added according to a liquid-to-solid mass ratio of 10:1, heated to 70°C and subjected to condensation reflux, magnetically stirred for 10h, hot suction filtration was performed, washed with ultrapure water according to a liquid-to-solid mass ratio of 40:1, followed by suction filtration and washing with dilute hydrochloric acid having a mass fraction of 5% according to a liquid-to-solid mass ratio of 15:1, and then washed with ultrapure water according to a liquid-to-solid mass ratio of 40:1, the obtained filter cake was dried in a blast drying oven at 120°C for 4h, a porous carbon was obtained. The porous carbon was ball-milled to a D₅₀ of 8-10µm, and the excess metal ions were removed by a magnetic separator, an asphalt-based supercapacitor carbon was obtained. The electron microscope photograph and the Raman spectrogram of the supercapacitor carbon were basically consistent with FIG. 2 and FIG. 3.

The specific surface area of the supercapacitor carbon was 2,162m²/g, the total content of the pores with a pore diameter less than 0.6nm and the pores with a pore diameter larger than 2.0nm was 25%, the content of pores with a pore diameter of 1.0-2.0nm was 2.1 times the content of pores with a pore diameter of 0.6-1.0nm, and the size La of the aromatic lamellae was 4.6nm.

Upon the electrochemical testing, the organic tethered supercapacitor had a mass ratio capacitance of 39.3F/g at a current density of 1A/g; the organic tethered supercapacitor had a mass ratio capacitance of 35.3F/g at an increased current density of 15A/g; the specific capacitance retention rate was 89.8%, the specific capacitance retention rate after 100,000 charge-discharge cycles was 87.6%.

### Example 3

5g of montmorillonite (Na-MMT, produced by the Macklin Corporation, with a specific surface area of 240m²/g and an average particle diameter of 10µm) was accurately weighed and placed in a 100mL single-mouth flask, 50mL of sulfuric acid solution with a concentration of 1.5mol/L was added, stirred at a constant temperature of 40°C and carried out the acidification for 30 h, cooled to room temperature and subjected to suction filtration, the product was washed with deionized water to neutral, then subjected to drying at 105°C for 12 h, milled and sieved to obtain an acidified montmorillonite with a particle diameter less than 15µm and a specific surface area of 503m²/g.

20g of petroleum asphalt (with a softening point of 240°C and a density of 1.18g/cm³) was weighed, heated to 250°C, 5.7g of the acidified montmorillonite was added into the asphalt in the molten state under the stirring condition, the molten blend was sheared by using a high speed shearing machine at a shearing rate of 5,000 r/min for 2h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 520°C at a temperature rise rate of 8°C/min under the nitrogen gas flow rate of 200mL/min, the carbonization at the constant temperature was performed for 20 min, the temperature was further increased to 600°C at a temperature rise rate of 5°C/min, the carbonization at the constant temperature was performed for 80 min, then cooled to room temperature, the carbonized product was pulverized to a micron level in a gas flow-breaker as the second material.

15g of the second material and 30g of KOH were uniformly mixed and loaded into a corundum ark, which was put into an activation furnace, after the air in the activation furnace was replaced with nitrogen gas at a flow rate of 500mL/min for 20min, the temperature was increased to 850°C at a temperature rise rate of 8°C/min under the nitrogen gas flow rate of 300mL/min, the activation at the constant temperature was performed for 60 min, the heating was shut off, the product was cooled to room temperature and taken out as an activated product. The activated product was transferred into a flask, deionized water was added according to a liquid-to-solid mass ratio of 30:1, heated to 100°C and subjected to condensation reflux, magnetically stirred for 12h, hot suction filtration was performed, washed with ultrapure water according to a liquid-to-solid mass ratio of 40:1, followed by suction filtration and washing with dilute hydrochloric acid having a mass fraction of 5% according to a liquid-to-solid mass ratio of 15:1, and then washed with ultrapure water according to a liquid-to-solid mass ratio of 40:1, the obtained filter cake was dried in a blast drying oven at 105°C for 8h, a porous carbon was obtained. The porous carbon was ball-milled to a D₅₀ of 8-10µm, and the excess metal ions were removed by a magnetic separator, an asphalt-based supercapacitor carbon was obtained. The electron microscope photograph and the Raman spectrogram of the supercapacitor carbon were basically consistent with FIG. 2 and FIG. 3.

The specific surface area of the supercapacitor carbon was 1,923m²/g, the total content of the pores with a pore diameter less than 0.6nm and the pores with a pore diameter larger than 2.0nm was 30%, the content of pores with a pore diameter of 1.0-2.0nm was 2.6 times the content of pores with a pore diameter of 0.6-1.0nm, and the size La of the aromatic lamellae was 5.1nm.

Upon the electrochemical testing, the organic tethered supercapacitor had a mass ratio capacitance of 35.4F/g at a current density of 1A/g; the organic tethered supercapacitor had a mass ratio capacitance of 31.6F/g at an increased current density of 15A/g; the specific capacitance retention rate was 89.0%, the specific capacitance retention rate after 100,000 charge-discharge cycles was 88.3%.

### Example 4

10g of Calcium-based montmorillonite (Ga-MMT, with a specific surface area of 190m²/g and an average particle diameter of 15µm) was accurately weighed and placed in a 200mL single-mouth flask, 120mL of hydrochloric acid solution with a concentration of 0.5mol/L was added, stirred at a constant temperature of 100°C and carried out the acidification for 30 h, cooled to room temperature and subjected to suction filtration, the product was washed with deionized water to neutral, then subjected to drying at 105°C for 12 h, milled and sieved to obtain an acidified montmorillonite with a particle diameter less than 15µm and a specific surface area of 352m²/g.

30g of petroleum asphalt (with a softening point of 150°C and a density of 1.08g/cm³) was weighed, heated to 250°C, 0.75g of the acidified montmorillonite was added into the asphalt in the molten state under the stirring condition, the molten blend was subjected to a mechanical stirring for 2h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 490°C at a temperature rise rate of 3°C/min under the nitrogen gas flow rate of 200mL/min, the carbonization at the constant temperature was performed for 30 min, the temperature was further increased to 650°C at a temperature rise rate of 8°C/min, the carbonization at the constant temperature was performed for 100 min, then cooled to room temperature, the carbonized product was pulverized to a micron level in a gas flow-breaker as the second material.

20g of the second material and 36g of KOH were uniformly mixed and loaded into a corundum ark, which was put into an activation furnace, after the air in the activation furnace was replaced with nitrogen gas at a flow rate of 500mL/min for 20min, the temperature was increased to 820°C at a temperature rise rate of 10°C/min under the nitrogen gas flow rate of 250mL/min, the activation at the constant temperature was performed for 100 min, the heating was shut off, the product was cooled to room temperature and taken out as an activated product. The activated product was transferred into a flask, deionized water was added according to a liquid-to-solid mass ratio of 30:1, heated to 100°C and subjected to condensation reflux, magnetically stirred for 12h, hot suction filtration was performed, washed with ultrapure water according to a liquid-to-solid mass ratio of 30:1, followed by suction filtration and washing with dilute hydrochloric acid having a mass fraction of 5% according to a liquid-to-solid mass ratio of 15:1, and then washed with ultrapure water according to a liquid-to-solid mass ratio of 30:1, the obtained filter cake was dried in a blast drying oven at 105°C for 6h, a porous carbon was obtained. The porous carbon was ball-milled to a D₅₀ of 8-10µm, and the excess metal ions were removed by a magnetic separator, an asphalt-based supercapacitor carbon was obtained.

The specific surface area of the supercapacitor carbon was 1,787m²/g, the total content of the pores with a pore diameter less than 0.6nm and the pores with a pore diameter larger than 2.0nm was 39%, the content of pores with a pore diameter of 1.0-2.0nm was 1.7 times the content of pores with a pore diameter of 0.6-1.0nm, and the size La of the aromatic lamellae was 4.4nm.

Upon the electrochemical testing, the organic tethered supercapacitor had a mass ratio capacitance of 27.1F/g at a current density of 1A/g; the organic tethered supercapacitor had a mass ratio capacitance of 22.6F/g at an increased current density of 15A/g; the specific capacitance retention rate was 83.3%, the specific capacitance retention rate after 100,000 charge-discharge cycles was 80.5%.

### Example 5

15g of petroleum asphalt (with a softening point of 215°C and a density of 1.14g/cm³) was weighed, heated to 260°C, 1.5g of the hydrogen-based montmorillonite (H-MMT, with a specific surface area of 485m²/g and an average particle diameter of 15µm) was weighed and added into the asphalt in the molten state under the stirring condition, the molten blend was sheared by using a high speed shearing machine at a shearing rate of 4,000 r/min for 2h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 500°C at a temperature rise rate of 6°C/min under the nitrogen gas flow rate of 300mL/min, the carbonization at the constant temperature was performed for 80 min, the temperature was further increased to 610°C at a temperature rise rate of 12°C/min, the carbonization at the constant temperature was performed for 150 min, then cooled to room temperature, the carbonized product was pulverized to a micron level in a gas flow-breaker as the second material.

10g of the second material and 28g of KOH were uniformly mixed and loaded into a corundum ark, which was put into an activation furnace, after the air in the activation furnace was replaced with nitrogen gas at a flow rate of 500mL/min for 20min, the temperature was increased to 750°C at a temperature rise rate of 10°C/min under the nitrogen gas flow rate of 200mL/min, the activation at the constant temperature was performed for 90 min, the heating was shut off, the product was cooled to room temperature and taken out as an activated product. The activated product was transferred into a flask, deionized water was added according to a liquid-to-solid mass ratio of 30:1, heated to 100°C and subjected to condensation reflux, magnetically stirred for 12h, hot suction filtration was performed, washed with ultrapure water according to a liquid-to-solid mass ratio of 40:1, followed by suction filtration and washing with dilute hydrochloric acid having a mass fraction of 5% according to a liquid-to-solid mass ratio of 20:1, and then washed with ultrapure water according to a liquid-to-solid mass ratio of 30:1, the obtained filter cake was dried in a blast drying oven at 105°C for 6h, a porous carbon was obtained. The porous carbon was ball-milled to a D₅₀ of 8-10µm, and the excess metal ions were removed by a magnetic separator, an asphalt-based supercapacitor carbon was obtained.

The specific surface area of the supercapacitor carbon was 2,069m²/g, the total content of the pores with a pore diameter less than 0.6nm and the pores with a pore diameter larger than 2.0nm was 38%, the content of pores with a pore diameter of 1.0-2.0nm was 2.0 times the content of pores with a pore diameter of 0.6-1.0nm, and the size La of the aromatic lamellae was 4.7nm.

Upon the electrochemical testing, the organic tethered supercapacitor had a mass ratio capacitance of 35.2F/g at a current density of 1A/g; the organic tethered supercapacitor had a mass ratio capacitance of 29.6F/g at an increased current density of 15A/g; the specific capacitance retention rate was 84.1%, the specific capacitance retention rate after 100,000 charge-discharge cycles was 82.6%.

### Example 6

10g of magnesium-based montmorillonite (Mg-MMT, with a specific surface area of 190m²/g and an average particle diameter of 8µm) was accurately weighed and placed in a 150mL single-mouth flask, 80mL of acetic acid solution with a concentration of 3mol/L was added, stirred at a constant temperature of 60°C and carried out the acidification for 18 h, cooled to room temperature and subjected to suction filtration, the product was washed with deionized water to neutral, then subjected to drying at 110°C for 12 h, milled and sieved to obtain an acidified montmorillonite with a particle diameter less than 15µm and a specific surface area of 367m²/g.

20g of petroleum asphalt (with a softening point of 230°C and a density of 1.17g/cm³) was weighed, heated to 270°C, 5g of the acidified montmorillonite was added into the asphalt in the molten state under the stirring condition, the molten blend was sheared by using a high speed shearing machine at a shearing rate of 8,000 r/min for 0.5h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 580°C at a temperature rise rate of 5°C/min under the nitrogen gas flow rate of 250mL/min, the carbonization at the constant temperature was performed for 300 min, then cooled to room temperature, the carbonized product was pulverized to a micron level in a gas flow-breaker as the second material.

16g of the second material and 35g of KOH were uniformly mixed and loaded into a corundum ark, which was put into an activation furnace, after the air in the activation furnace was replaced with nitrogen gas at a flow rate of 500mL/min for 20min, the temperature was increased to 880°C at a temperature rise rate of 8°C/min under the nitrogen gas flow rate of 200mL/min, the activation at the constant temperature was performed for 60 min, the heating was shut off, the product was cooled to room temperature and taken out as an activated product. The activated product was transferred into a flask, deionized water was added according to a liquid-to-solid mass ratio of 30:1, heated to 100°C and subjected to condensation reflux, magnetically stirred for 12h, hot suction filtration was performed, washed with ultrapure water according to a liquid-to-solid mass ratio of 40:1, followed by suction filtration and washing with dilute hydrochloric acid having a mass fraction of 5% according to a liquid-to-solid mass ratio of 15:1, and then washed with ultrapure water according to a liquid-to-solid mass ratio of 40:1, the obtained filter cake was dried in a blast drying oven at 105°C for 8h, a porous carbon was obtained. The porous carbon was ball-milled to a D₅₀ of 8-10µm, and the excess metal ions were removed by a magnetic separator, an asphalt-based supercapacitor carbon was obtained.

The specific surface area of the supercapacitor carbon was 1,982m²/g, the total content of the pores with a pore diameter less than 0.6nm and the pores with a pore diameter larger than 2.0nm was 28%, the content of pores with a pore diameter of 1.0-2.0nm was 1.8 times the content of pores with a pore diameter of 0.6-1.0nm, and the size La of the aromatic lamellae was 4.4nm.

Upon the electrochemical testing, the organic tethered supercapacitor had a mass ratio capacitance of 28.7F/g at a current density of 1A/g; the organic tethered supercapacitor had a mass ratio capacitance of 23.1F/g at an increased current density of 15A/g; the specific capacitance retention rate was 80.5%, the specific capacitance retention rate after 100,000 charge-discharge cycles was 79.2%.

### Example 7

8g of asphalt (with a softening point of 260°C and a density of 1.20g/cm³) was weighed, heated to 280°C, 1g of Na-MMT (produced by the Macklin Corporation, with a specific surface area of 240m²/g and an average particle diameter of 10µm) was added into the asphalt in the molten state, the molten blend was sheared by using a high speed shearing machine at a shearing rate of 6,000 r/min for 1.5h, cooled to room temperature and taken out in a solid state as a first material.

The first material was loaded into a quartz ark, which was placed in a carbonization furnace, after the air in the activation furnace was replaced with nitrogen gas at a flow rate of 500mL/min for 20min, the temperature was increased to 300°C at a temperature rise rate of 5°C/min under the nitrogen gas flow rate of 250mL/min, the carbonization at the constant temperature was performed for 80 min, the temperature was further increased to 550°C at a temperature rise rate of 10°C/min, the carbonization at the constant temperature was performed for 100 min, then cooled to room temperature, the carbonized product was pulverized to a micron level in a gas flow-breaker as the second material.

8g of the second material and 32g of KOH were uniformly mixed and loaded into a corundum ark, which was put into an activation furnace, after the air in the activation furnace was replaced with nitrogen gas at a flow rate of 500mL/min for 20min, the temperature was increased to 800°C at a temperature rise rate of 7°C/min under the nitrogen gas flow rate of 300mL/min, the activation at the constant temperature was performed for 70 min, the heating was shut off, the product was cooled to room temperature and taken out as an activated product. The activated product was transferred into a flask, deionized water was added according to a liquid-to-solid mass ratio of 30:1, heated to 100°C and subjected to condensation reflux, magnetically stirred for 12h, hot suction filtration was performed, washed with ultrapure water according to a liquid-to-solid mass ratio of 40:1, followed by suction filtration and washing with dilute hydrochloric acid having a mass fraction of 5% according to a liquid-to-solid mass ratio of 15:1, and then washed with ultrapure water according to a liquid-to-solid mass ratio of 40:1, the obtained filter cake was dried in a blast drying oven at 105°C for 8h, a porous carbon was obtained. The porous carbon was ball-milled to a D₅₀ of 8-10µm, and the excess metal ions were removed by a magnetic separator, an asphalt-based supercapacitor carbon was obtained.

The specific surface area of the supercapacitor carbon was 1,832m²/g, the total content of the pores with a pore diameter less than 0.6nm and the pores with a pore diameter larger than 2.0nm was 40%, the content of pores with a pore diameter of 1.0-2.0nm was 3 times the content of pores with a pore diameter of 0.6-1.0nm, and the size La of the aromatic lamellae was 4.5nm.

Upon the electrochemical testing, the organic tethered supercapacitor had a mass ratio capacitance of 24.3F/g at a current density of 1A/g; the organic tethered supercapacitor had a mass ratio capacitance of 19.4F/g at an increased current density of 15A/g; the specific capacitance retention rate was 79.7%, the specific capacitance retention rate after 100,000 charge-discharge cycles was 78.6%.

### Comparative Example 1

The supercapacitor carbon was prepared according to the method of Example 1, except that the montmorillonite was not added during the carbonization process, and the acidification step of the montmorillonite was not included, and the petroleum asphalt was directly subjected to carbonization and activation, the supercapacitor carbon was prepared.

The specific surface area of the supercapacitor carbon was 2,184m²/g, the total content of the pores with a pore diameter less than 0.6nm and the pores with a pore diameter larger than 2.0nm was 51%, the content of pores with a pore diameter of 1.0-2.0nm was 1.7 times the content of micropores with a pore diameter of 0.6-1.0nm, and the size La of the aromatic lamellae was 4.3nm.

Upon the electrochemical testing, the organic tethered supercapacitor had a mass ratio capacitance of 38.7F/g at a current density of 1A/g; the organic tethered supercapacitor had a mass ratio capacitance of 28.7F/g at an increased current density of 15A/g; the specific capacitance retention rate was 74.2%, the specific capacitance retention rate after 100,000 charge-discharge cycles was 68.5%.

### Comparative Example 2

The supercapacitor carbon was prepared according to the method of Example 1, except that the mixed system of acidified montmorillonite and asphalt was not subjected to a carbonization step and was directly subjected to activation, the supercapacitor carbon was prepared.

The specific surface area of the supercapacitor carbon was 2,008m²/g, the total content of the pores with a pore diameter less than 0.6nm and the pores with a pore diameter larger than 2.0nm was 42%, the content of pores with a pore diameter of 1.0-2.0nm was 3.5 times the content of micropores with a pore diameter of 0.6-1.0nm, and the size La of the aromatic lamellae was 4.1nm.

Upon the electrochemical testing, the organic tethered supercapacitor had a mass ratio capacitance of 36.9F/g at a current density of 1A/g; the organic tethered supercapacitor had a mass ratio capacitance of 26.6F/g at an increased current density of 15A/g; the specific capacitance retention rate was 72.1%, the specific capacitance retention rate after 100,000 charge-discharge cycles was 67.8%.

### Comparative Example 3

The supercapacitor carbon was prepared according to the method of Example 1, except that montmorillonite was replaced with the same weight of silica, the supercapacitor carbon was prepared.

The specific surface area of the supercapacitor carbon was 648m²/g, the total content of the pores with a pore diameter less than 0.6nm and the pores with a pore diameter larger than 2.0nm was 52%, the content of pores with a pore diameter of 1.0-2.0nm was 3.4 times the content of micropores with a pore diameter of 0.6-1.0nm, and the size La of the aromatic lamellae was 4.0nm.

Upon the electrochemical testing, the organic tethered supercapacitor had a mass ratio capacitance of 12F/g at a current density of 1A/g; the organic tethered supercapacitor had a mass ratio capacitance of 5.3F/g at an increased current density of 15A/g; the specific capacitance retention rate was 41.7%, the specific capacitance retention rate after 100,000 charge-discharge cycles was 23.2%.

### Comparative Example 4

The porous carbon material was prepared according to the method disclosed in Example 1 of CN106115694A, as a result, the specific surface area of the porous carbon material was 3,167 m²/g, the mesoporosity of pores with a pore diameter of 2-50nm was 63vol%, the total content of the pores with a pore diameter less than 0.6nm and the pores with a pore diameter larger than 2.0nm was 82%, the content of pores with a pore diameter of 1.0-2.0nm was 1.1 times the content of micropores with a pore diameter of 0.6-1.0nm, and the size La of the aromatic lamellae was 4.0nm.

Upon the electrochemical testing, the organic tethered supercapacitor had a mass ratio capacitance of 45F/g at a current density of 1A/g; the organic tethered supercapacitor had a mass ratio capacitance of 29.9F/g at an increased current density of 15A/g; the specific capacitance retention rate was 66.4%, the specific capacitance retention rate after 100,000 charge-discharge cycles was 68.5%.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A porous carbon material, the porous carbon material has a pore volume of pores with a pore diameter of 0.6-2nm more than 50vol%, preferably not less than 60vol%, and a ratio of pore volume of pores with a pore diameter of 1-2nm to pore volume of pores with a pore diameter of 0.6-1nm is within the range of 1-3, preferably within the range of 1.9-2.6.

2. The porous carbon material according to claim 1, wherein the specific surface area of the porous carbon material is within the range of 1,500-3,000 m²/g, preferably within the range of 1,800-2,700 m²/g.

3. The porous carbon material according to claim 1 or 2, wherein the size La value of aromatic lamellae of said porous carbon material is within the range of 4.4-6nm, preferably within the range of 4.6-5.8nm.

4. The porous carbon material according to claim 1 or 2 or 3, wherein said porous carbon material has a median particle size D₅₀ within the range of 5-10µm and a carbon content of 99wt% or more.

5. The porous carbon material according to any one of claims 1-4, wherein the Raman spectrum of said porous carbon material only presents spectral peaks in the range of 1300-1600 wavenumber/cm⁻¹ within the range of 800-2000 wavenumber/cm⁻¹, and the spectral peak near 1350 wavenumber/cm⁻¹ has a larger peak width and a smaller peak height than the spectral peak near 1580 wavenumber/cm⁻¹; preferably, the peak width ratio and the peak height ratio of the spectral peak near 1350 wavenumber/cm⁻¹ to the spectral peak near 1580 wavenumber/cm⁻¹ are 1: (0.5-0.95) and 1: (1.05-1.5) respectively.

6. A preparation method for a porous carbon material, the preparation method comprises subjecting an organic carbon source to carbonization and activation successively, is **characterized in that** the carbonization is performed in the presence of montmorillonite.

7. The preparation method according to claim 6, wherein the montmorillonite has a specific surface area within the range of 50-1,000m²/g, preferably within the range of 150-600m²/g.

8. The preparation method according to claim 7, wherein the montmorillonite is an acid-treated montmorillonite, the acid treatment is performed by contacting a montmorillonite raw material with an acid solution, the liquid-solid ratio of said montmorillonite raw material to said acid solution is within the range of 5-50mL/g, preferably within the range of 8-30mL/g, and the H⁺ concentration of the acid solution is within the range of 0.1-6 mol/L, preferably within the range of 0.5-3 mol/L.

9. The preparation method according to claim 8, wherein the contacting is performed at a temperature within the range of 20-100°C, preferably within the range of 30-70°C; and the time is 2-48h, preferably 5-30 h.

10. The preparation method according to claim 8 or 9, wherein the montmorillonite raw material has an average particle diameter within the range of 0.1-20µm, preferably within the range of 0.3-15µm, and the montmorillonite raw material has a specific surface area within the range of 20-300 m²/g, preferably within the range of 20-250 m²/g.

11. The preparation method according to any one of claims 6-10, wherein the carbonization is performed at a temperature within the range of 200-650°C, preferably 300-600°C, and the time is 40-500 minutes, preferably 50-200 minutes.

12. The preparation method according to any one of claims 6-11, wherein the carbonization mode comprises initially performing carbonization at a temperature of 300-550°C, preferably 450-520°C for 10-100 min, preferably 20-60 min, and then performing carbonization at a temperature of 400-650°C, preferably 500-600°C for 40-200 min, preferably 60-200 min.

13. The preparation method according to any one of claims 6-12, wherein the mass ratio of the organic carbon source to montmorillonite is (100-1) : 1, preferably (50-3) : 1.

14. The preparation method according to any one of claims 6-13, wherein the weight ratio of the carbonized material to the activating agent used for activation is 1: (0.2-10), preferably 1: (1.5-3); the activation temperature is within the range of 600-1,000°C, preferably within the range of 700-900°C; the activation time is 20-180 min, preferably 20-120 min; preferably, the activating agent is NaOH and/or KOH.

15. A porous carbon material produced with the preparation method according to any one of claims 6-14.

16. Use of the porous carbon material according to any one of claims 1-5 and 15 in a supercapacitor, preferably as an active electrode material.

17. A supercapacitor, is **characterized in that** the supercapacitor uses the porous carbon material according to any one of claims 1-5 and 15 as an active electrode material.

18. The supercapacitor according to claim 17, wherein the supercapacitor is an organic tethered supercapacitor having a mass ratio capacitance within the range of 25-45F/g, preferably within the range of 35-45F/g at a current density of 1A/g; the organic tethered supercapacitor has a mass ratio capacitance within the range of 20-40F/g, preferably within the range of 30-39F/g at an increased current density of 15A/g; the specific capacitance retention rate after 100,000 charge-discharge cycles is within the range of 78-95%, preferably within the range of 85-95%.
